# EUROPEAN PATENT SPECIFICATION

(11) **EP 3 245 467 B1**
(45) Date of publication and mention of the grant of the patent: **20.02.2019**
(21) Application number: 15741757.7
(22) Date of filing: 20.03.2015
(51) Int. Cl.: F28D 17/02, F28D 17/00, F28F 27/00, F28D 20/00

(54) **THERMAL ENERGY STORAGE WITH INCREASED CAPACITY**
WÄRMEENERGIESPEICHER MIT ERHÖHTER KAPAZITÄT
SYSTÈME D'ACCUMULATION D'ÉNERGIE THERMIQUE À CAPACITÉ ACCRUE

(43) Date of publication of application: 22.11.2017
(73) Proprietor: Siemens Aktiengesellschaft, 80333 München (DE)
(72) Inventor: SEIDEL, Volker, 08014 Barcelona (ES); BARMEIER, Till Andreas, 20259 Hamburg (DE); VOEHRINGER, Walter, 20459 Hamburg (DE)
(86) International application number: PCT/EP2015/055919
(87) International publication number: WO 2016/150462

(56) References cited:
- WO-A1-2014/102418
- WO-A2-2010/136609
- WO-A2-2013/160650
- GB-A- 2 516 453
- US-A1- 2009 178 409

## Description

### Field of invention

The present invention relates to the field of temporarily storing thermal energy. In particular, the present invention relates to a thermal energy storage device comprising a container with heat storage material and a control unit.

Furthermore, the invention relates to a method for storing thermal energy within such a thermal energy storing device and to a method for releasing thermal energy from such a thermal energy storing device.

### Art Background

Thermal energy storage plays an important role in the improvement of the stability of power supply networks and for increasing the energy efficiency of power supply networks.

The production of electric power from various types of renewable energy sources such as for instance wind turbines or solar power plants is not continuous. The electric power production depends on environmental conditions such as wind speed. Hence there may be a time gap between times when the production of energy is high but the energy demand is low and times when the production of energy is low but the energy demand is high.

One known approach to solve this problem is to temporally store energy using a thermal energy storage device. Such thermal energy storage devices comprise a container which is filled with a storage material having the ability to receive thermal energy by being heated up and to release the stored thermal energy at a later time. Usually, the material is heated up (charged) by a working fluid or heat transfer fluid from a hot reservoir which has a temperature higher than the material. At a later time, the stored thermal energy is recovered by the same or by another working fluid from a cold reservoir which has a temperature lower than the material.

The hot reservoir may be an outlet of a heater or any other source of relatively hot heat transfer medium from which the thermal energy is received during the first operational mode.

The cold reservoir may be an outlet of a heat recovery steam generator or any other source of relatively cold heat transfer medium to which the stored thermal energy is released during the second operational mode. The cold reservoir may also be the environment at ambient temperature.

Before an initial operation of the thermal energy storage device, the whole interior of the container has the same homogenous temperature level. When in a first cycle the working fluid having a higher temperature than the storage material is guided through the container from a first end of the container to a second end of the container, the temperature level inside the container is no longer homogenous. The first end of the container comprises a region with a relatively high temperature and the second end of the container comprises a region with a relatively low temperature. Between these two regions a region with a temperature gradient is located. After a plurality of cycles in which thermal energy is stored and subsequently released, the region with the temperature gradient inside the container is expanded due to local thermal transfer processes and thermal inertia of the storage material. Accordingly, a temperature profile inside the container is flattened out. In other words, with increasing cycles number an axial temperature curve from the first end of the container to the second end of the container flattens out and the region with the temperature gradient becomes larger. Natural convection in idle phases can amplify this effect. The transfer rate of thermal energy between the working fluid and the storage material depends on a temperature difference between the working fluid and the storage material. Therefore, substantially the regions within the container with a low temperature contribute to the thermal energy receiving from the working fluid (which has a temperature higher than the temperature of the storage material). Accordingly, substantially the regions with a relatively high temperature contribute to the thermal energy releasing to the working fluid (which has a temperature lower than the temperature of the storage material). In contrast, the region with the thermal gradient can contribute to the heat transfer only marginal.

Thus, the relatively large region with the temperature gradient within the container and the corresponding flat temperature curve after a plurality of cycles lead to a reduced thermal storage capacity of the conventional thermal energy storage, since the region at the first end of the storage that contains the useful energy at a high temperature gets smaller.

Usually, the time period of receiving thermal energy is terminated when the temperature at the end of the container with the relatively low temperature starts to rise. At this time (after a plurality of cycles), the region with the temperature gradient is relatively large and the regions of extremely high or extremely low temperatures are relatively small. Thus, only a small volume of the container can effectively contribute to the heat transfer.

One known approach for solving the problem of decreased thermal storage capacity is to extend a duration of the time period of thermal energy receiving until the whole interior of the container has a homogenous high temperature. Likewise, a duration of the time period of releasing thermal energy is extended until the whole interior of the container has a homogenous low temperature. This leads to energy losses, since the working fluid leaves the container with a high content of thermal energy which is not stored and therefore lost to the environment. Furthermore extending the time period of releasing thermal energy leads to extended durations with a low discharge temperature that is not useful for thermodynamic processes. Further, extending the duration of the time periods until a homogenous temperature in the container is obtained leads to considerably increased time requirements

Patent document US 2009/0178409 A1 describes a thermal storage device according to the preamble of claim 1.

Patent document WO 2013/160650 A2 describes a thermal energy storage device having two operational modes and comprising valved storage layers.

Patent document GB 2516453 A describes a valved thermal energy storage device comprising two pressure vessels having a charging and a discharging flow mode.

There may be a need for improving the temporal storage of thermal energy in particular with respect to the storage capacity and the efficiency of a thermal energy handling system.

### Summary of the Invention

This need may be met by the subject matter according to the independent claims. Advantageous embodiments of the present invention are described by the dependent claims.

According to the invention there is provided a thermal energy storage device comprising a container comprising a heat storage material. The thermal energy storage device further comprises a first fluid port being fluidically coupled with the container at a first end of the container and a second fluid port being fluidically coupled with the container at a second end of the container. In addition, the thermal energy storage device comprises a control unit adapted for controlling the operation of the thermal energy storage device such that in a first operational mode, wherein the heat storage material is supposed to receive thermal energy from a first heat transfer fluid, the first heat transfer fluid is guided from the first fluid port to the second fluid port. The control unit is further adapted for controlling the operation of the thermal energy storage device such that in a second operational mode, wherein the heat storage material is supposed to release thermal energy to the first heat transfer fluid or to a second heat transfer fluid, the first heat transfer fluid or the second heat transfer fluid is guided from the second fluid port to the first fluid port. The control unit is further adapted for operating the thermal energy storage device in the first operational mode until a first outlet temperature of the first heat transfer fluid being dispensed from the second fluid port has reached a first predetermined temperature.

In particular, the thermal energy storage device may comprise a temperature sensor at the second fluid port which is adapted for monitoring of the outlet temperature of the first heat transfer fluid.

The described thermal energy storage device is based on the idea that by operating the thermal energy storage device in the first operational mode (i.e. in a charging mode when thermal energy is received by the heat storage material) until the outlet temperature of the heat transfer fluid reaches a predetermined temperature, a thermal energy storage with a desired storage capacity for thermal energy can be realized.

In particular, during the first operational mode, a hot heat transfer fluid is guided from the first fluid port of the container to the second fluid port of the container along the heat storage material. The heat storage material receives thermal energy from the heat transfer fluid and the temperature of the heat transfer fluid decreases, wherein a temperature profile establishes inside the container. The temperature profile comprises a relatively hot region at the first fluid port, a relatively cold region at the second fluid port and between these two regions a region with a temperature gradient from the high temperature to the low temperature. As described above, only the regions with hot and cold temperatures substantially contribute to the heat transfer between the heat transfer fluid and the heat storage material, whereas the region with the temperature gradient is not suitable for transferring a large amount of thermal energy.

Both the size of the region with the temperature gradient and the location of this region inside the container depend on a duration of the first operational mode. During the first operational mode the outlet temperature of the heat transfer fluid at the second fluid port increases. By choice of the first predetermined temperature, the length of the region of the temperature profile within the container and thereby the heat storage capacity of the thermal heat storage device can be adjusted as desired.

This may be in particular advantageous when a thermal energy storage device with a high thermal energy storage capacity is desired. Further, in applications where a high thermal energy storage capacity is not mandatory, the storage length (the dimension in flow direction) and consequently the duration of the first operational mode can be kept short, such that the pressure loss of the storage container and also the necessary storage material can be reduced.

By choosing the first predetermined temperature, the thermal energy storage capacity and the duration of the first operational mode (i.e. charging mode) can be adapted to specific applications easily. Alternatively given a desired capacity and duration, the dimensions of the thermal energy storage device can be adapted.

The heat transfer fluid may be a gas or a liquid or a mixture of gas and liquid.

According to the invention the first predetermined temperature is higher than a first temperature level of a first region within the container, which is the region with the lowest temperature inside the container, by a first temperature difference.

In other words, the first operational mode ends when an outlet temperature of the heat transfer fluid at the second fluid port has reached the first predetermined temperature which is higher than the coldest region within the container.

Alternatively, the first operational mode ends when an outlet temperature of the heat transfer fluid at the second fluid port has reached the first predetermined temperature which is higher than the temperature of a cold reservoir.

In particular, the temperature of the coldest region within the container may be substantially the same as the temperature of the cold reservoir or may be slightly higher than the temperature of the cold reservoir.

The cold reservoir may be an outlet of a heat recovery steam generator or any other source of relatively cold heat transfer medium to which the stored thermal energy is released during the second operational mode. In particular the cold reservoir may also be the environment at ambient temperature.

When the outlet temperature has reached a temperature which is higher than the coldest portion within the container or higher than the temperature of the cold reservoir, the temperature profile within the container has established as follows: at the first fluid port a relatively large region with relatively high temperature exists and at the second fluid port a relatively small region with a temperature gradient exists, since by choice of the predetermined temperature the coldest part of the gradient is removed of the storage. Further, the region with the relatively cold temperature has been completely removed of the container. Since the large region with the high temperature constitutes the usable thermal storage capacity for a subsequent releasing of thermal energy, the total usable storage capacity is increased.

Due to the high ratio of a storage volume which contributes to the storage capacity, the entire storage can be designed smaller which reduces the investment costs and the pressure loss over the container. This improves the total efficiency of the thermal energy storage device.

A further advantage can be seen in that such a thermal energy storage device develops a stable temperature profile in the container over a plurality of cycles in which thermal energy is stored and subsequently released. As mentioned above, the size of the region with the temperature gradient usually expands with the number of cycles. By ending the first operational mode when the outlet temperature of the heat transfer fluid reaches a temperature which is higher than the coldest portion inside the container, after several cycles a temperature profile establishes inside the container which does not change its shape any more. In other words, after several cycles the size of the region with the temperature gradient does not increase any more with the cycles number. When terminating the first operational mode in a specific cycle all portions inside the container have the same temperature as after the first operational mode of a subsequent cycle. This ensures fixed storage parameters, e.g. a utilization level which is constant over time.

According to the invention the first temperature difference is at least 10%, in particular at least 20%, and further in particular at least 30% of a total temperature difference between the highest temperature and the lowest temperature inside the container.

For example, the first temperature difference may be at least 50 K, in particular at least 100 K, and further in particular at least 200 K.

It has turned out as advantageously when the control unit is adapted for controlling the thermal energy storage device such that the first operational mode ends when the outlet temperature of the heat transfer medium has reached a temperature which is between 10% and 30% of the total temperature difference higher than the coldest portion within the container, because the flattening of the temperature gradient stabilizes after a finite number of cycles.

According to an embodiment not covered by the invention, the control unit may be adapted for controlling the thermal energy storage device such that the first operational mode ends when the outlet temperature of the heat transfer medium has reached a temperature which is higher than the cold reservoir temperature, in particular between 50 K and 200 K higher than the cold reservoir temperature.

When the control unit is adapted such that the outlet temperature of the heat transfer fluid reaches a predetermined temperature within this range, inside the container a temperature profile is established which is advantageously for many applications. The temperature profile comprises a relatively large region with high temperature and a relatively small region of temperature gradient such that the usable storage capacity is increased. Further, after several cycles the temperature profile in the container is stable over the subsequent cycles such that fixed storage parameters like the fixed utilization level are obtained.

According to a further embodiment of the invention the control unit is further adapted for operating the thermal energy storage device in the second operational mode until a second outlet temperature of the first heat transfer fluid or the second heat transfer fluid being dispensed from the first fluid port has reached a second predetermined temperature.

In particular, the thermal energy storage device may comprise a temperature sensor at the first fluid port which is adapted for monitoring of the outlet temperature of the heat transfer fluid during the second operational mode.

During the second operational mode (discharge mode), a relatively cold heat transfer fluid is guided from the second fluid port of the container to the first fluid port of the container along the heat storage material. The heat storage material releases thermal energy to the heat transfer fluid, wherein a temperature profile establishes inside the container which replaces the temperature profile which might already exist from a previous charge cycle). The temperature profile comprises a relatively cold region at the second fluid port, a relatively hot region at the first fluid port and between these two regions a region with a temperature gradient. As described above, only the regions with extremely hot and extremely cold temperatures substantially contribute to the heat transfer between the heat transfer fluid and the heat storage material, whereas the region with the temperature gradient is not suitable for transferring a large amount of thermal energy.

Both the size of the region with the temperature gradient and the location of this region inside the container depend on a duration of the second operational mode. At the end of the second operational mode the outlet temperature of the heat transfer fluid at the first fluid port decreases. By ending the second operational mode when the outlet temperature of the heat transfer fluid crosses the second predetermined temperature from high to low, the temperature profile within the container and thereby the heat storage capacity of the thermal heat storage device can be adjusted as desired.

By choosing the second predetermined temperature, the thermal energy storage capacity and the duration of the second operational mode (i.e. discharging mode) can be adapted to specific applications easily.

According to a further embodiment of the invention the second predetermined temperature is lower than a second temperature level of a second portion within the container, which is the portion with the highest temperature inside the container, by a second temperature difference.

In other words, the second operational mode ends when the outlet temperature of the heat transfer fluid at the first fluid port has reached the second predetermined temperature which is lower than the portion with the highest temperature within the container.

Alternatively, the second operational mode ends when the outlet temperature of the heat transfer fluid at the first fluid port has reached the second predetermined temperature which is lower than the temperature of a hot reservoir.

In particular, the temperature of the portion with the highest temperature within the container may be substantially the same as the temperature of the hot reservoir or may be slightly lower than the temperature of the hot reservoir.

The hot reservoir may be an outlet of a heater or any other source of relatively hot heat transfer medium from which the thermal energy is received during the first operational mode.

When the outlet temperature has reached a temperature which is lower than the portion with the highest temperature within the container or lower than the temperature of the hot reservoir, the temperature profile within the container has established as follows: at the second fluid port a relatively large region with relatively low temperature exists and at the first fluid port a relatively small region with a temperature gradient exists, since the hottest part of the gradient is removed of the storage. The region with the relatively high temperature has been completely removed of the container. Since the large region with the low temperature constitutes the usable thermal storage capacity for a subsequent receiving of thermal energy, the total usable storage capacity is increased.

Due to the high ratio of a storage volume which contributes to the storage capacity, the entire storage can be designed smaller which reduces the investment costs and the pressure loss over the container. This improves the total efficiency of the thermal energy storage device.

A further advantage can be seen in that such a thermal energy storage device develops a stable temperature profile in the container over a plurality of cycles in which thermal energy is stored and subsequently released. As mentioned above, the size of the region with the temperature gradient usually expands with the number of cycles. By ending the second operational mode when the outlet temperature of the heat transfer fluid reaches a predetermined temperature which is lower than the hottest portion inside the container, after several cycles a temperature profile establishes inside the container which does not change its shape any more. In other words, after several cycles the size of the region with the temperature gradient does not increase any more with the number of cycles. When terminating the second operational mode in a specific cycle all portions inside the container have the same temperature as after the second operational mode of a subsequent cycle. This ensures fixed storage parameters, e.g. the utilization level which is constant over time.

According to a further embodiment of the invention the second temperature difference is at least 10%, in particular at least 20%, and further in particular at least 30% of the total temperature difference between the highest temperature and the lowest temperature inside the container.

For example, the second temperature difference may be at least 25 K, in particular at least 50 K, and further in particular at least 100 K.

It has turned out as to be in particular of advantage when the control unit is adapted for controlling the thermal energy storage device such that the second operational mode ends when the second outlet temperature of the heat transfer medium has reached a temperature which is between 10% and 30% of the total temperature difference lower than the hottest portion within the container.

Alternatively, the control unit may be adapted for controlling the thermal energy storage device such that the second operational mode ends when the second outlet temperature of the heat transfer medium has reached a temperature which is lower than the hot reservoir temperature, in particular between 10% and 30% of the total temperature difference lower than the hot reservoir temperature. For example, the second operational mode ends when the second outlet temperature has reached a temperature which is between 25 K and 200 K lower than the hot reservoir temperature.

When the control unit is adapted such that the second outlet temperature of the heat transfer fluid reaches a second predetermined temperature within this range, inside the container a temperature profile is established which is advantageously for many applications. The temperature profile comprises a relatively large region with low temperature and a relatively small region of temperature gradient such that the usable storage capacity is increased. Further, after several cycles the temperature profile is stable for subsequent cycles such that fixed storage parameters like the fixed utilization level are obtained.

According to a further embodiment of the invention the heat storage material comprises at least one of the group consisting of stones, bricks and ceramics.

In particular, the heat storage material may be a packed bed heat storage with a homogenous high density arrangement of heat storage material. Stones, bricks and ceramics may provide the advantage of being inexpensive and durable. In general, all materials with high thermal capacity can be used as heat storage material.

According to a further embodiment of the invention a thermal energy handling system is provided, comprising a thermal energy storage device according to any of the above described embodiments, a further thermal energy storage device, and a thermal energy transfer element. The thermal energy transfer element is connected between the thermal energy storage device and the further thermal energy storage device and is adapted to transfer thermal energy received from the first heat transfer fluid being dispensed from the second fluid port to the further thermal energy storage device.

The described thermal energy handling system is based on the idea that heat energy losses from the thermal energy storage device to the environment may be avoided by recovering the remaining thermal energy which is still contained in the first heat transfer medium after it is dispensed through the second fluid port.

The further thermal energy storage device may have the same structure as the thermal energy storage device of the described embodiments.

Alternatively the further thermal energy storage device may be a heat storage fluid tank which is adapted to provide preheated fluid to a system connected downstream of the heat storage fluid tank.

The thermal energy transfer element may be a heat exchanger, in particular an air to water heat exchanger or a gas to fluid heat exchanger.

In particular, the remaining thermal energy in the first heat transfer fluid may be transferred to the further heat storage device by the heat exchanger. Subsequently the transferred thermal energy can be used for further applications. Therefore, the thermal energy storage device can be operated with a desired capacity without energy losses to the environment. According to a further embodiment of the invention the thermal energy handling system further comprises a heat recovery steam generator being fluidically coupled with the further thermal energy storage device.

In particular, the further energy storage device is connected to a feed fluid system that feeds the heat recovery steam generator. The heat recovery steam generator is directly coupled to the thermal energy storage device according to an aspect of the invention.

In particular, the further heat storage device may be a feed fluid tank which provides a feed fluid to the heat recovery steam generator. The remaining thermal energy in the first heat transfer fluid after it is dispensed through the second fluid port is transferred to the feed fluid tank to preheat the feed fluid for the heat recovery steam generator. This leads to an increased average temperature in the feed fluid tank and thus to a carnotization of a Rankine cycle. In other words preheating the feed fluid for the heat recovery steam generator leads to an improved efficiency in a subsequent steam cycle.

According to a further embodiment of the invention the thermal energy handling system further comprises a steam turbine being thermally driven by the heat recovery steam generator.

The steam turbine may be partially or completely driven by the heat recovery steam generator.

A thermal energy handling system for the production of electric power by the steam turbine can be operated with an improved efficiency and with a desired thermal storage capacity by using the thermal energy storage device according to the first aspect of the invention. Further, the thermal energy handling system can be operated without thermal energy losses by recovering the thermal energy which is dispensed with the first fluid out of the thermal energy storage device, since the recovered thermal energy can be used for a carnotization of the steam cycle of the steam turbine.

According to a further embodiment of the invention the further thermal energy storage device is a tank being fillable with a liquid, wherein the thermal energy handling system further comprises a pressurizing means being connected with the tank and being configured for pressurizing liquid within the tank.

Before a feed liquid enters a high pressure pump upstream the heat recovery steam generator, the feed liquid has to comply with predefined conditions, i.e. the liquid should have a predefined temperature and a predefined pressure.

The predefined pressure may be the pressure level at the steam extraction outlet of the steam turbine, i.e. the steam extraction pressure level.

The pressurizable liquid tank may provide the advantage that the liquid within the tank can be stored with a higher temperature compared to a liquid tank under atmospheric pressure. In particular, the liquid within the tank may be stored with the predefined temperature and under the predefined pressure. Therefore, the pressurizable liquid tank may be a simple measure for ensuring that the feed liquid is provided with the predefined temperature and with the predefined pressure.

In particular, the further thermal energy storage device may be a feed water tank for the heat recovery steam generator.

Furthermore, the pressurizing means may comprise a pump.

According to a further embodiment of the invention the thermal energy handling system further comprises a heat exchanger being connected between the further thermal energy storage device and the heat recovery steam generator.

In particular, the heat exchanger is connected between the further thermal energy storage device and the low pressure pump and the high pressure pump of the feed fluid system of the heat recovery steam generator of the steam cycle.

The heat exchanger may be configured for adapting the pressure of the feed fluid to the predefined pressure while operating the further thermal energy storage device at a different pressure.

In this embodiment, the feed liquid tank may be configured for storing the feed liquid at atmospheric pressure and with a temperature which is slightly below the boiling temperature of the feed liquid.

Providing an additional heat exchanger between the further thermal energy storage device and the high pressure pump upstream the heat recovery steam generator is another option for ensuring that the feed liquid complies with the predefined conditions before it enters the high pressure pump upstream the heat recovery steam generator.

According to a further embodiment of the invention the thermal energy handling system further comprises a pumping device being connected between the further thermal energy storage device and the heat recovery steam generator.

In particular, the pumping device may be connected between the further thermal energy storage device and the low pressure pump and the high pressure pump of a feed liquid system of the heat recovery steam generator of the steam cycle.

In particular, the additional pumping device may be configured for adapting the pressure of the feed liquid to the steam extraction pressure level of the steam turbine.

Providing an additional pumping device is a further option for ensuring that the feed fluid complies with the predefined conditions before it enters the high pressure pump upstream the heat recovery steam generator.

According to the invention there is described a method for storing thermal energy within a thermal energy storage device, in particular within the thermal energy storage device according to any one of the described embodiments. The method comprises in a first operational mode, wherein a heat storage material is supposed to receive thermal energy from a first heat transfer fluid, guiding the first heat transfer fluid along the heat storage material from a first fluid port to a second fluid port until a first outlet temperature of the first heat transfer fluid being dispensed from the second fluid port has reached a first predetermined temperature, wherein the first predetermined temperature is higher than a first temperature level of a first portion within the container, which is the portion with the lowest temperature inside the container, by a first temperature difference,wherein the first temperature difference is between 10% and 30% of the total temperature difference inside the container.

Also the described method is based on the idea that by operating the thermal energy storage device in the first operational mode (i.e. in a charging mode when thermal energy is received by the heat storage material) until the outlet temperature of the heat transfer fluid reaches a predetermined temperature, a thermal energy storage with a desired storage capacity for thermal energy can be realized.

Further, by operating the thermal energy storage device until the outlet temperature of the heat transfer fluid reaches a predetermined temperature, a desired temperature profile establishes within a container of the thermal energy storage device. The resulting temperature profile has a desired ratio of regions with high temperature to a total volume of the container. The size of the region with the high temperature constitutes a usable thermal energy storage volume for a subsequent releasing (discharging) of the thermal energy to the heat transfer fluid.

According to the invention there is described a further method for releasing thermal energy from a thermal energy storage device, in particular from the thermal energy storage device according to any one of described embodiments. The method comprises in a second operational mode, wherein a heat storage material is supposed to release thermal energy to the first heat transfer fluid or to a second heat transfer fluid, guiding the first heat transfer fluid or the second heat transfer fluid from the second fluid port to the first fluid port until a second outlet temperature of the first heat transfer fluid or the second heat transfer fluid being dispensed from the first fluid port has reached a second predetermined temperature, wherein the second predetermined temperature is lower than a second temperature level of a second portion within the container, which is the portion with the highest temperature inside the container, by a second temperature difference,wherein the second temperature difference is between 10% and 30% of the total temperature difference inside the container.

Also the described method is based on the idea that by operating the thermal energy storage device in the second operational mode (i.e. in a discharging mode when thermal energy is released from the heat storage material to the heat transfer fluid) until the second outlet temperature of the heat transfer fluid reaches a second predetermined temperature, a thermal energy storage with a desired storage capacity for thermal energy can be realized.

Further, by operating the thermal energy storage device until the outlet temperature of the heat transfer fluid reaches a second predetermined temperature, a desired temperature profile establishes within a container of the thermal energy storage device. The resulting temperature profile has a desired ratio of a region with low temperature to a total volume of the container. The size of the region with the low temperature constitutes a usable thermal energy storage volume for a subsequent receiving (charging) of thermal energy from the heat transfer fluid.

In particular, when the described method for releasing thermal energy is carried out in combination with the method for storing thermal energy according to the third aspect of the invention, e.g. when the described methods are carried out alternately using the same thermal energy storage device, a method for operating a thermal energy storage device is provided which enables an improved storage capacity for thermal energy.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows a sectional view of a thermal energy storage device.
Figure 2 shows a sectional view of the thermal energy storage device.
Figure 3 shows a sectional view of a state of the art thermal energy storage device with different temperature regions inside the container after a specific number of charge and discharge cycles and the corresponding temperature curves.
Figure 4 shows a sectional view of a thermal energy storage device according to the present invention.
Figure 5 shows a schematic illustration of a thermal energy handling system according to an embodiment of the invention.
Figure 6 shows a schematic illustration of the thermal energy handling system according to a further embodiment of the invention.
Figure 7 shows a schematic illustration of the thermal energy handling system according to a still further embodiment of the invention.

### Detailed Description

The illustration in the drawing is schematically. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

Further, spatially relative terms, such as "front" and "back", "above" and "below", "left" and "right", et cetera are used to describe an element's relationship to another element(s) as illustrated in the figures. Thus, the spatially relative terms may apply to orientations in use which differ from the orientation depicted in the figures. Obviously all such spatially relative terms refer to the orientation shown in the figures only for ease of description and are not necessarily limiting as an apparatus according to an embodiment of the invention can assume orientations different than those illustrated in the figures when in use.

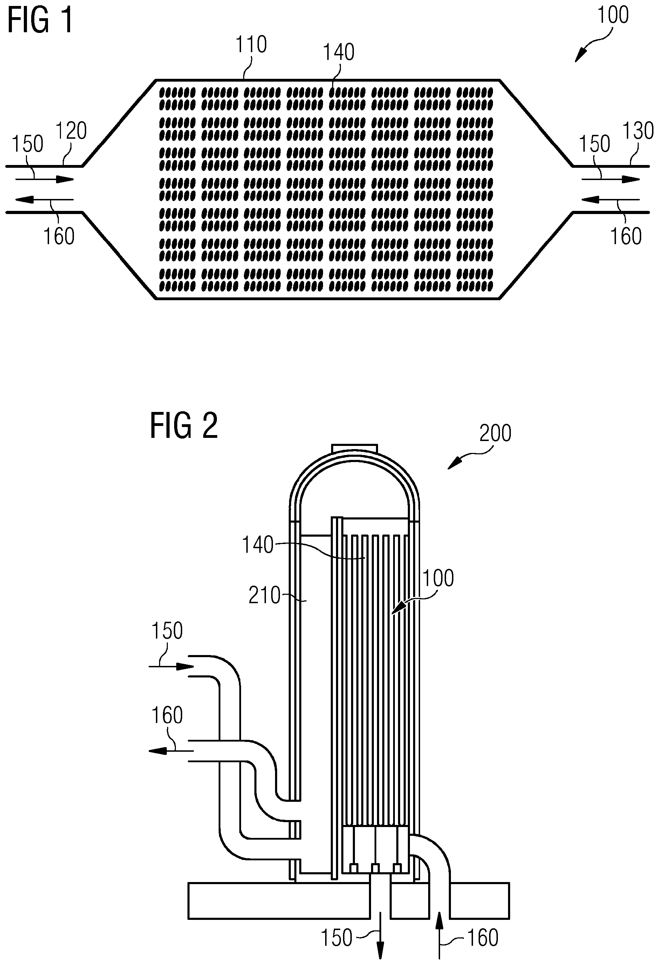

Figure 1 shows a sectional view of a thermal energy storage device 100. The thermal energy storage device 100 comprises a container 110 filled with a heat storage material 140 which is capable of being heated up and thereby storing thermal energy. The thermal energy storage device 100 further comprises a first fluid port 120 at a first end of the container 110 and a second fluid port 130 at a second end of the container 110. During a first operational mode (charging mode) a relatively hot first heat transfer fluid is guided through the container 110 from the first fluid port 120 to the second fluid port 130 which is indicated by the arrows 150. Thereby a part of the thermal energy is transferred from the first heat transfer fluid to the heat storage material 140. In a subsequent second operational mode, the relatively cold first heat storage fluid or a relatively cold second heat transfer fluid is guided through the container 110 from the second fluid port 130 to the first fluid port 120 which is indicated by the arrows 160. Thereby the stored energy is released from the heat storage material 140 to the second heat transfer fluid (or to the first heat transfer fluid).

Figure 2 shows a sectional view of an alternative embodiment of the thermal energy storage device. During a first operational mode the first heat transfer fluid is guided into a chamber 210 and is further guided through a vertical thermal energy storage device 100, which is filled with a heat storage material 140, e.g. stones. Thereby thermal energy from the first heat transfer fluid is transferred to the heat storage material 140. Subsequently, the first heat transfer fluid is dispensed through an outlet, as indicated by the arrow 150. During a subsequent second operational mode the thermal energy stored in the heat storage material is released to a second heat transfer fluid which is guided through the thermal energy storage device 200 in a counter current direction, as indicated by the arrows 160.

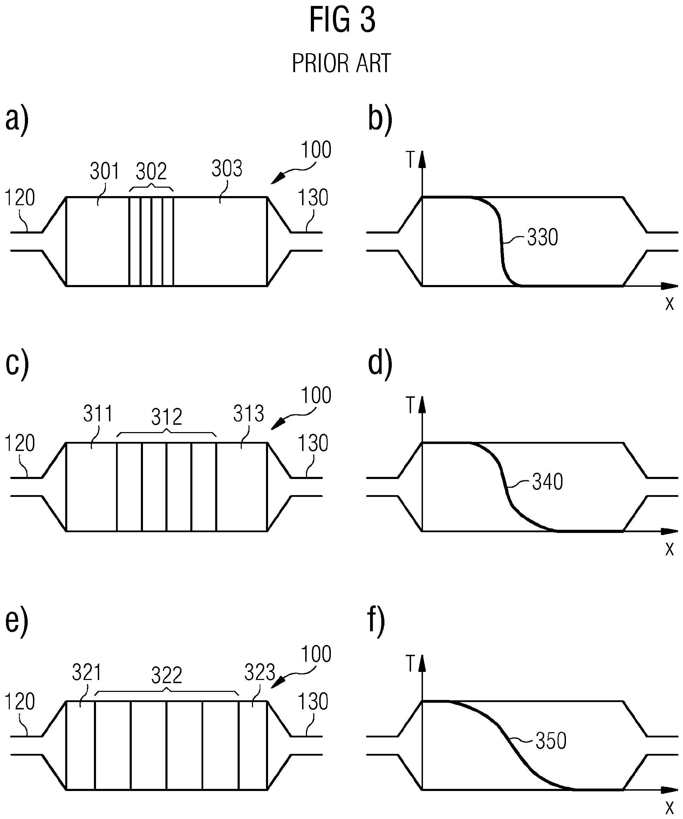

Figure 3 shows a sectional view of the state of the art thermal energy storage device with different temperature regions inside container after a specific number of charge and discharge cycles and the corresponding temperature curves.

Figure 3a shows the regions with different temperatures inside the container after an initial charge cycle, wherein the heat storage material (not shown) has received energy from a hot heat transfer medium. At the first end of the container is a relatively hot region 301 (e.g. a region with the temperature of the hot reservoir) and at the second end of the container is a relatively cold region 303 (e.g. a region with the temperature of the cold reservoir). Between these two regions there is a region 302 with a temperature gradient. Figure 3b shows the corresponding temperature curve 330 along an axial length of the container.

Figure 3c shows the regions with different temperatures after several charge and discharge cycles. At the first end of the container is the region 311 with relatively high temperature and at the second end of the container is the region 313 with relatively low temperature. Between the two regions is the region 312 with the temperature gradient. As can be seen from Fig. 3c, the sizes of the regions have changed compared to Fig. 3a. In particular, the sizes of the high temperature region 311 and the low temperature region 313 have become smaller, whereas the region 312 with the temperature gradient has become larger with increasing cycles number. Figure 3d shows the corresponding temperature curve 340 which has flattened out compared to the temperature curve 330.

Figure 3e shows the regions with different temperatures after a multitude of charge and discharge cycles. The size of the regions 321, 323 with high and low temperatures have become still smaller whereas the region 322 with the temperature gradient has become still larger. Figure 3f shows the corresponding temperature curve 350 which has further flattened out.

It should be mentioned that the thermal energy storage device 100 in Fig. 3a has a larger heat storage capacity in a subsequent charge and discharge cycle than the thermal energy storage device in Fig. 3e, since only the regions with high and low temperatures substantially contribute to the heat transfer rate between the heat storage material and the heat transfer fluid. Also only the regions with high temperature contribute to the capacity of the thermal energy storage device. In other words, in the shown state of the art thermal energy storage device the usable storage capacity of the thermal energy storage device decreases with the number of cycles.

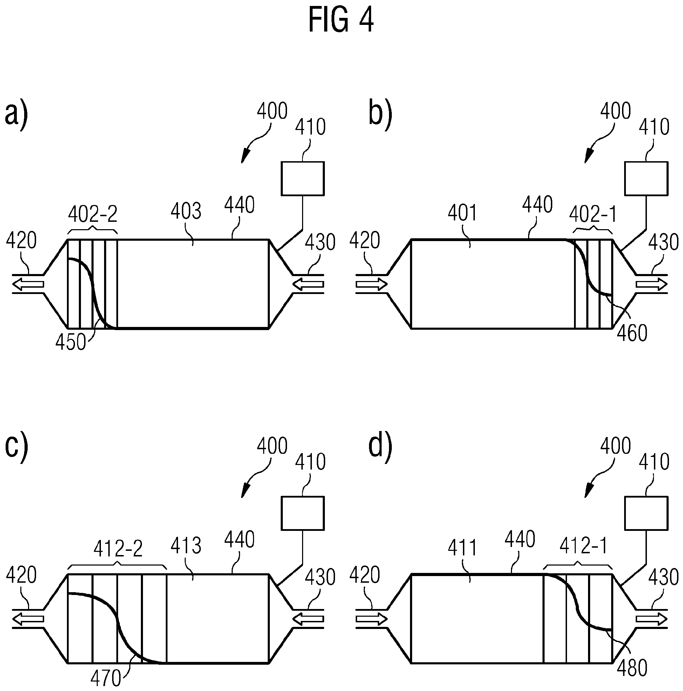

Figure 4 shows a sectional view of a thermal energy storage device 400 according to an embodiment of the present invention. During an initial charge cycle a hot heat transfer medium is guided from the first fluid port 420 to the second fluid port 430 of the container 440, thereby transferring thermal energy to the heat storage material (not shown). A control unit 410 is adapted to control the operation of the thermal energy storage device 400 such that a first operational mode (i.e. charging mode) ends, when the outlet temperature has reached a first predetermined temperature. In the shown example, the first predetermined temperature is a temperature which is higher than the temperature of the coldest region within the container 440. Figure 4b shows the regions with different temperatures inside the container 440 after an initial charge cycle. At the first end of the container is a region 401 with a relatively high temperature. At the second end of the container is a region 402-1 with a temperature gradient. The corresponding temperature curve 460 shows that the region with low temperature (e.g. with the temperature of the cold reservoir) shown in Fig. 3 is completely removed of the container 440. In addition, the coldest part of the gradient is also removed from the container.

During a second operational mode (discharge mode), a cold heat transfer medium is guided from the second fluid port 430 to the first fluid port 420 of the container 440, thereby receiving thermal energy from the heat storage material (not shown). The control unit 410 is adapted to control the operation of the thermal energy storage device 400 such that the second operational mode ends, when the outlet temperature has reached a second predetermined temperature. In the shown example, the second predetermined temperature is a temperature which is lower than the temperature of the hottest region within the container 440. Figure 4a shows the regions with different temperatures inside the container 440 after the discharge cycle. At the second end of the container 440 is a region 403 with a relatively low temperature. At the first end of the container 440 is a region 402-2 with a temperature gradient. The corresponding temperature curve 450 shows that the region with high temperature (e.g. with the temperature of the hot reservoir) shown in Fig. 3 is completely removed of the container 440.

Figures 4c and 4d show the regions of different temperatures inside the container after a plurality of charge and discharge cycles. In particular, Figure 4d shows the temperature profile when the control unit has just ended the first operational mode and Figure 4d shows the temperature profile when the control unit has just ended the second operational mode. The sizes of the regions 412-1, 412-2 with the temperature gradient have become larger compared to Fig. 4b and 4a but do not further increase with the cycles number from now on. In other words, the temperature profile inside the container is not influenced by the cycles number in the subsequent charge and discharge cycles any more.

When comparing Fig. 4d showing the thermal energy storage device according to the invention with Fig. 3e showing the state of the art thermal energy storage, both showing the temperature profile after a plurality of cycles number, it is apparent that the usable storage volume (i.e. the region 411 with high temperature) is increased.

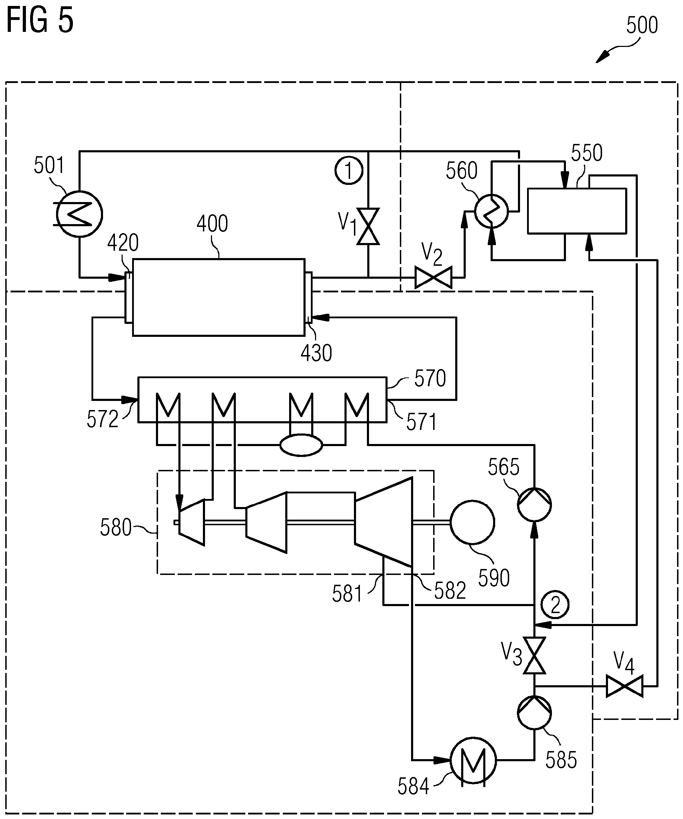

Figure 5 shows a schematic illustration of a thermal energy handling system 500 according to an embodiment of the invention. In the first operational mode, the first heat transfer fluid is guided from a heater 501 to the first fluid port 420 of the thermal energy storage device 400, e.g. with a temperature of 873 K. Inside the container of the thermal energy storage device 400 it is guided along the heat storage material (not shown) to the second fluid port 430, thereby heating up the heat storage material. If the thermal energy storage device is charged at a constant load at the heater 501, the temperature difference between the hot end of the container and the cold end at the container needs to be constant. When the heat transfer fluid is dispensed through the second fluid port 430, the temperature may be in a range between e.g. 473 K and 673 K. In other words, the heat transfer fluid still contains thermal energy. The dispensed heat transfer fluid is divided into two parts: a first part flows through valve v1 and is guided back to the heater. A second part flows through valve v2 to a thermal energy transfer element 560. To avoid losses of thermal energy to the environment, a part of the remaining thermal energy in the dispensed heat transfer fluid is transferred to a further thermal energy storage device 550 by the thermal energy transfer element 560 before the heat transfer medium is mixed with the flow through v1 and guided back to the heater 501. The ratio of mass flows through valves v1 and v2 is controlled considering a desired temperature at position 1, because a heat transfer medium moving element (e.g. a fan or a blower) at the position 1 may be designed for the desired temperature, for example 473 K. The design of the thermal energy transfer element and the further heat storage may ensure that the desired temperature at a mixer at position 1 can be kept constant.

The thermal energy stored in the further thermal energy storage device 550 is released to a second flow of heat transfer fluid which constitutes the feed fluid for a heat recovery steam generator (HRSG) 570. In the described embodiment, the further heat storage device 550 is a pressurizable water tank. In particular, the further heat storage device 550 is adapted to store the feed fluid at a temperature and a pressure level which corresponds to a desired temperature and a desired pressure level at a position 2 (steam extraction position) upstream a high pressure pump 565. Valves v3 and v4 may regulate the flow through the further heat storage device 550 in order to ensure that the desired feed fluid temperature at the position 2 is reached. The thus preheated feed fluid is then delivered to the HRSG 570 by the high pressure pump 565. An outlet 571 of the HRSG 570 is connected to the second fluid port 430 of the thermal energy storage device 400. During a second operational mode (discharge mode), wherein the stored thermal energy is released from the thermal energy storage device 400 to the heat transfer fluid, the heat transfer fluid having a temperature of e.g. 473 K is guided from the outlet 571 through the second fluid port 430 into the container of the thermal energy storage device 400. Inside the container, the heat transfer fluid is guided along the heat storage material to the first fluid port 420, thereby receiving thermal energy from the heat storage material. When the heat transfer fluid is dispensed through the first fluid port 420 it may have a temperature of e.g. 873 K. From the first fluid port 420 the heat transfer fluid is guided back into the HRSG 570 through an inlet 572 of the HRSG 570. The HRSG 570 drives a steam turbine 580 which is operable connected with a generator 590 to produce electrical power. A steam extraction outlet 581 of the turbine is connected with the feed fluid flow of the HRSG 570 at the position 2 upstream the high pressure pump 565. A further outlet 582 of the turbine 580 is connected to the feed fluid flow at the position 2 through a condenser 584 and a pump 585.

It has to be mentioned that by transferring the thermal energy released with the first heat transfer fluid through the second fluid port 430 to the further thermal energy storage device 550 to preheat the feed fluid of the HRSG, a efficiency of a steam cycle of the energy handling system 500 may be improved and energy losses to the environment may be avoided. Using a pressurizable feed fluid tank 550 may be a simple measure to provide the feed fluid with the desired temperature and pressure at the steam extraction position 2.

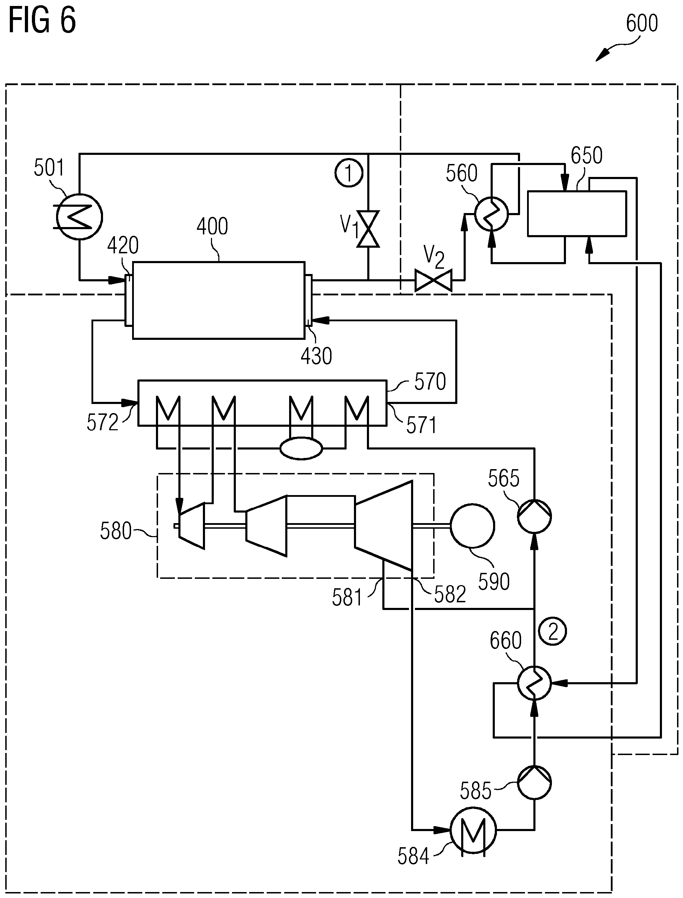

Figure 6 shows a schematic illustration of the thermal energy handling system 600 according to a further embodiment of the invention. The thermal energy handling system 600 differs from that of Fig. 5 in that the further thermal energy storage device 650 is not pressurized. Instead, the feed fluid for the HRSG is stored in the further thermal energy storage device 650 at atmospheric pressure and at a temperature slightly below the boiling temperature of the heat transfer fluid, e.g. water. Therefore, a further heat exchanger 660 may be connected between the further thermal energy storage device 650 and the position 2, which heat exchanger may be configured to adapt the pressure of the feed fluid to the desired pressure level at the steam extraction position 2. In this configuration, a further fluid motion device such as a pump may be used to move the fluid in a circuit of the further thermal energy storage 650 and the further heat exchanger 660.

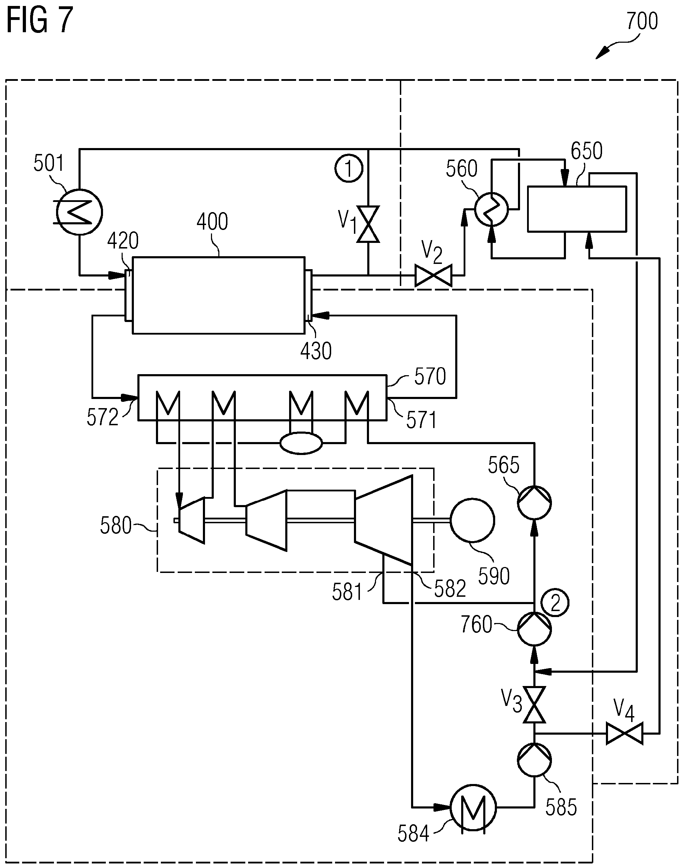

Figure 7 shows a schematic illustration of the thermal energy handling system 700 according to a still further embodiment of the invention. In this embodiment, the feed fluid is stored at atmospheric pressure in the further thermal energy storage device 650. The pump 585 downstream of the condenser 584 pressurizes feed fluid to ambient pressure. A pumping device 760 pressurizes the feed fluid to the desired steam extraction pressure level at the steam extraction position 2. The flow rate through the further thermal energy storage device 650 and thus the temperature of the feed fluid can be regulated by valves v3 and v4.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. A thermal energy storage device (400) comprising
a container (440) comprising a heat storage material,
a first fluid port (420) being fluidically coupled with the container (440) at a first end of the container (440),
a second fluid port (430) being fluidically coupled with the container (440) at a second end of the container (440),
a control unit (410) adapted for controlling the operation of the thermal energy storage device (400) such that
in a first operational mode, wherein the heat storage material is supposed to receive thermal energy from a first heat transfer fluid, the first heat transfer fluid is guided from the first fluid port (420) to the second fluid port (430), and
in a second operational mode, wherein the heat storage material is supposed to release thermal energy to the first heat transfer fluid or to a second heat transfer fluid, the first heat transfer fluid or the second heat transfer fluid is guided from the second fluid port (430) to the first fluid port (420), and
wherein the control unit (410) is further adapted for operating the thermal energy storage device (400) in the first operational mode until a first outlet temperature of the first heat transfer fluid being dispensed from the second fluid port (430) has reached a first predetermined temperature,
**characterized in that** the first predetermined temperature is higher than a first temperature level of a first portion within the container (440), which is the portion with the lowest temperature inside the container (440), by a first temperature difference,
wherein the first temperature difference is between 10% and 30% of the total temperature difference inside the container (440).

2. The thermal energy storage device according to the preceding claim, wherein
the control unit (410) is further adapted for operating the thermal energy storage device (400) in the second operational mode until a second outlet temperature of the first heat transfer fluid or the second heat transfer fluid being dispensed from the first fluid port (420) has reached a second predetermined temperature.

3. The thermal energy storage device according to the preceding claim, wherein
the second predetermined temperature is lower than a second temperature level of a second portion within the container (440), which is the portion with the highest temperature inside the container (440), by a second temperature difference.

4. The thermal energy storage device according to the preceding claim, wherein
the second temperature difference is at least 10%, in particular at least 20%, and further in particular at least 30% of the total temperature difference between the highest temperature and the lowest temperature inside the container.

5. The thermal energy storage device according to any of the above claims, wherein
the heat storage material comprises at least one of the group consisting of stones, bricks and ceramics.

6. A thermal energy handling system (500, 600, 700) comprising
a thermal energy storage device (400) according to any of the above claims,
a further thermal energy storage device (550, 650), and a thermal energy transfer element (560) which is connected between the thermal energy storage device (400) and the further thermal energy storage device (550, 650) and which is adapted to transfer thermal energy received from the first heat transfer fluid being dispensed from the second fluid port (430) to the further thermal energy storage device (550, 650).

7. The thermal energy handling system according to the preceding claim 6, further comprising
a heat recovery steam generator (570) being fluidically coupled with the further thermal energy storage device (550, 650) .

8. The thermal energy handling system according to the preceding claim 7, further comprising
a steam turbine (580) being thermally driven by the heat recovery steam generator (570).

9. The thermal energy handling system according to any of the preceding claims 6 to 8, wherein
the further thermal energy storage device (550) is a tank being fillable with a liquid, wherein the thermal energy handling system (500) further comprises
a pressurizing means being connected with the tank and being configured for pressurizing liquid within the tank.

10. The thermal energy handling system according to any one of the preceding claims 7 to 9, further comprising
a heat exchanger (660) being connected between the further thermal energy storage device (650) and the heat recovery steam generator.

11. The thermal energy handling system according to any one of the preceding claims 7 to 10, further comprising
a pumping device (760) being connected between the further thermal energy storage device (650) and the heat recovery steam generator (570).

12. A method for storing thermal energy within a thermal energy storage device, in particular within the thermal energy storage device (400) according to any one of the claims 1 to 5, wherein the method comprises
in a first operational mode, wherein a heat storage material is supposed to receive thermal energy from a first heat transfer fluid,
guiding the first heat transfer fluid along the heat storage material from a first fluid port (420) to a second fluid port (430) until
a first outlet temperature of the first heat transfer fluid being dispensed from the second fluid port (430) has reached a first predetermined temperature,
**characterized in that** the first predetermined temperature is higher than a first temperature level of a first portion within the container (440), which is the portion with the lowest temperature inside the container (440), by a first temperature difference,
wherein the first temperature difference is between 10% and 30% of the total temperature difference inside the container (440).

13. A method for releasing thermal energy from a thermal energy storage device, in particular from the thermal energy storage device (400) according to any one of the claims 1 to 5, wherein the method comprises
in a second operational mode, wherein a heat storage material is supposed to release thermal energy to the first heat transfer fluid or to a second heat transfer fluid, guiding the first heat transfer fluid or the second heat transfer fluid from the second fluid port (430) to the first fluid port (420) until
a second outlet temperature of the first heat transfer fluid or the second heat transfer fluid being dispensed from the first fluid port (420) has reached a second predetermined temperature,
**characterized in that** the second predetermined temperature is lower than a second temperature level of a second portion within the container (440), which is the portion with the highest temperature inside the container (440), by a second temperature difference,
wherein the second temperature difference is between 10% and 30% of the total temperature difference inside the container (440).

## Patentansprüche

1. Wärmeenergiespeichervorrichtung (400), welche umfasst:
einen Behälter (440), der ein Wärmespeichermaterial umfasst,
einen ersten Fluidanschluss (420), der mit dem Behälter (440) an einem ersten Ende des Behälters (440) fluidisch gekoppelt ist,
einen zweiten Fluidanschluss (430), der mit dem Behälter (440) an einem zweiten Ende des Behälters (440) fluidisch gekoppelt ist,
eine Steuereinheit (410), die dafür ausgelegt ist, den Betrieb der Wärmeenergiespeichervorrichtung (400) so zu steuern, dass
in einer ersten Betriebsart, in der das Wärmespeichermaterial Wärmeenergie von einem ersten Wärmeträgermedium empfangen soll, das erste Wärmeträgermedium von dem ersten Fluidanschluss (420) zu dem zweiten Fluidanschluss (430) geleitet wird, und
in einer zweiten Betriebsart, in der das Wärmespeichermaterial Wärmeenergie an das erste Wärmeträgermedium oder an ein zweites Wärmeträgermedium abgeben soll, das erste Wärmeträgermedium oder das zweite Wärmeträgermedium von dem zweiten Fluidanschluss (430) zu
dem ersten Fluidanschluss (420) geleitet wird, und wobei die Steuereinheit (410) ferner dafür ausgelegt ist, die Wärmeenergiespeichervorrichtung (400) in der ersten Betriebsart zu betreiben, bis eine erste Auslasstemperatur des von dem zweiten Fluidanschluss (430) abgegebenen ersten Wärmeträgermediums eine erste vorbestimmte Temperatur erreicht hat,
**dadurch gekennzeichnet, dass**
die erste vorbestimmte Temperatur um eine erste Temperaturdifferenz höher als ein erstes Temperaturniveau eines ersten Abschnitts innerhalb des Behälters (440) ist, welcher der Abschnitt mit der niedrigsten Temperatur innerhalb des Behälters (440) ist,
wobei die Temperaturdifferenz zwischen 10 % und 30 % der Gesamttemperaturdifferenz innerhalb des Behälters (440) beträgt.

2. Wärmeenergiespeichervorrichtung nach dem vorhergehenden Anspruch, wobei
die Steuereinheit (410) ferner dafür ausgelegt ist, die Wärmeenergiespeichervorrichtung (400) in der zweiten Betriebsart zu betreiben, bis eine zweite Auslasstemperatur des von dem ersten Fluidanschluss (420) abgegebenen ersten Wärmeträgermediums oder zweiten Wärmeträgermediums eine zweite vorbestimmte Temperatur erreicht hat.

3. Wärmeenergiespeichervorrichtung nach dem vorhergehenden Anspruch, wobei
die zweite vorbestimmte Temperatur um eine zweite Temperaturdifferenz niedriger als ein zweites Temperaturniveau eines zweiten Abschnitts innerhalb des Behälters (440) ist, welcher der Abschnitt mit der höchsten Temperatur innerhalb des Behälters (440) ist.

4. Wärmeenergiespeichervorrichtung nach dem vorhergehenden Anspruch, wobei
die zweite Temperaturdifferenz wenigstens 10 %, insbesondere wenigstens 20 % und ferner insbesondere wenigstens 30 % der Gesamttemperaturdifferenz zwischen der höchsten Temperatur und der niedrigsten Temperatur innerhalb des Behälters beträgt.

5. Wärmeenergiespeichervorrichtung nach einem der obigen Ansprüche, wobei
das Wärmespeichermaterial wenigstens eines aus der Gruppe umfasst, welche aus Steinen, Ziegeln und Keramiken besteht.

6. Wärmeenergie-Handlingsystem (500, 600, 700), welches umfasst:
eine Wärmeenergiespeichervorrichtung (400) nach einem der obigen Ansprüche,
eine weitere Wärmeenergiespeichervorrichtung (550, 650) und
ein Wärmeenergie-Übertragungselement (560), welches zwischen die Wärmeenergiespeichervorrichtung (400) und die weitere Wärmeenergiespeichervorrichtung (550, 650) geschaltet ist und welches dafür ausgelegt ist, Wärmeenergie, die von dem von dem zweiten Fluidanschluss (430) abgegebenen ersten Wärmeträgermedium empfangen wurde, zu der weiteren Wärmeenergiespeichervorrichtung (550, 650) zu übertragen.

7. Wärmeenergie-Handlingsystem nach dem vorhergehenden Anspruch 6, welches ferner umfasst:
einen Abhitzedampferzeuger (570), der mit der weiteren Wärmeenergiespeichervorrichtung (550, 650) fluidisch gekoppelt ist.

8. Wärmeenergie-Handlingsystem nach dem vorhergehenden Anspruch 7, welches ferner umfasst:
eine Dampfturbine (580), die von dem Abhitzedampferzeuger (570) thermisch angetrieben wird.

9. Wärmeenergie-Handlingsystem nach einem der vorhergehenden Ansprüche 6 bis 8, wobei
die weitere Wärmeenergiespeichervorrichtung (550) ein Tank ist, der mit einer Flüssigkeit füllbar ist, wobei das Wärmeenergie-Handlingsystem (500) ferner umfasst:
ein Druckbeaufschlagungsmittel, das mit dem Tank verbunden ist und dafür eingerichtet ist, Flüssigkeit innerhalb des Tanks mit Druck zu beaufschlagen.

10. Wärmeenergie-Handlingsystem nach einem der vorhergehenden Ansprüche 7 bis 9, welches ferner umfasst:
einen Wärmetauscher (660), der zwischen die weitere Wärmeenergiespeichervorrichtung (650) und den Abhitzedampferzeuger geschaltet ist.

11. Wärmeenergie-Handlingsystem nach einem der vorhergehenden Ansprüche 7 bis 10, welches ferner umfasst:
eine Pumpvorrichtung (760), die zwischen die weitere Wärmeenergiespeichervorrichtung (650) und den Abhitzedampferzeuger (570) geschaltet ist.

12. Verfahren zum Speichern von Wärmeenergie innerhalb einer Wärmeenergiespeichervorrichtung, insbesondere innerhalb der Wärmeenergiespeichervorrichtung (400) nach einem der Ansprüche 1 bis 5, wobei das Verfahren umfasst:
in einer ersten Betriebsart, in der ein Wärmespeichermaterial Wärmeenergie von einem ersten Wärmeträgermedium empfangen soll, Leiten des ersten Wärmeträgermediums entlang des Wärmespeichermaterials von einem ersten Fluidanschluss (420) zu einem zweiten Fluidanschluss (430), bis eine erste Auslasstemperatur des von dem zweiten Fluidanschluss (430) abgegebenen ersten Wärmeträgermediums eine erste vorbestimmte Temperatur erreicht hat,
**dadurch gekennzeichnet, dass**
die erste vorbestimmte Temperatur um eine erste Temperaturdifferenz höher als ein erstes Temperaturniveau eines ersten Abschnitts innerhalb des Behälters (440) ist, welcher der Abschnitt mit der niedrigsten Temperatur innerhalb des Behälters (440) ist,
wobei die erste Temperaturdifferenz zwischen 10 % und 30 % der Gesamttemperaturdifferenz innerhalb des Behälters (440) beträgt.

13. Verfahren zum Abgeben von Wärmeenergie aus einer Wärmeenergiespeichervorrichtung, insbesondere aus der Wärmeenergiespeichervorrichtung (400) nach einem der Ansprüche 1 bis 5, wobei das Verfahren umfasst:
in einer zweiten Betriebsart, in der ein Wärmespeichermaterial Wärmeenergie an das erste Wärmeträgermedium oder an ein zweites Wärmeträgermedium abgeben soll, Leiten des ersten Wärmeträgermediums oder des zweiten Wärmeträgermediums von dem zweiten Fluidanschluss (430) zu dem ersten Fluidanschluss (420), bis eine zweite Auslasstemperatur des von dem ersten Fluidanschluss (420) abgegebenen ersten Wärmeträgermediums oder zweiten Wärmeträgermediums eine zweite vorbestimmte Temperatur erreicht hat,
**dadurch gekennzeichnet, dass**
die zweite vorbestimmte Temperatur um eine zweite Temperaturdifferenz niedriger als ein zweites Temperaturniveau eines zweiten Abschnitts innerhalb des Behälters (440) ist, welcher der Abschnitt mit der höchsten Temperatur innerhalb des Behälters (440) ist,
wobei die zweite Temperaturdifferenz zwischen 10 % und 30 % der Gesamttemperaturdifferenz innerhalb des Behälters (440) beträgt.

## Revendications

1. Dispositif de stockage d'énergie thermique (400) comprenant
un récipient (440) comprenant un matériau de stockage de chaleur,
un premier orifice de fluide (420) qui est couplé de manière fluidique avec le récipient (440) au niveau d'une première extrémité du récipient (440),
un second orifice de fluide (430) qui est couplé de manière fluidique avec le récipient (440) au niveau d'une seconde extrémité du récipient (440),
une unité de commande (410) adaptée pour commander le fonctionnement du dispositif de stockage d'énergie thermique (400) de telle sorte que
dans un premier mode de fonctionnement, dans lequel le matériau de stockage de chaleur est supposé recevoir de l'énergie thermique en provenance d'un premier fluide de transfert de chaleur, le premier fluide de transfert de chaleur est guidé du premier orifice de fluide (420) vers le second orifice de fluide (430), et
dans un second mode de fonctionnement, dans lequel le matériau de stockage de chaleur est supposé libérer de l'énergie thermique vers le premier fluide de transfert de chaleur ou vers un second fluide de transfert de chaleur, le premier fluide de transfert de chaleur ou le second fluide de transfert de chaleur est guidé du second orifice de fluide (430) vers le premier orifice de fluide (420), et
dans lequel l'unité de commande (410) est en outre adaptée pour faire fonctionner le dispositif de stockage d'énergie thermique (400) dans le premier mode de fonctionnement jusqu'à ce qu'une première température de sortie du premier fluide de transfert de chaleur qui est distribué à partir du second orifice de fluide (430) ait atteint une première température prédéterminée,
**caractérisé en ce que**
la première température prédéterminée est plus élevée qu'un premier niveau de température d'une première section au sein du récipient (440), qui est la section avec la température la plus basse à l'intérieur du récipient (440), d'une première différence de température,
dans lequel la première différence de température se situe entre 10 % et 30 % de la différence de température totale à l'intérieur du récipient (440).

2. Dispositif de stockage d'énergie thermique selon la revendication précédente, dans lequel
l'unité de commande (410) est en outre adaptée pour faire fonctionner le dispositif de stockage d'énergie thermique (400) dans le second mode de fonctionnement jusqu'à ce qu'une seconde température de sortie du premier fluide de transfert de chaleur ou du second fluide de transfert de chaleur qui est distribué à partir du premier orifice de fluide (420) ait atteint une seconde température prédéterminée.

3. Dispositif de stockage d'énergie thermique selon la revendication précédente, dans lequel
la seconde température prédéterminée est plus basse qu'un second niveau de température d'une seconde section au sein du récipient (440), qui est la section avec la température la plus élevée à l'intérieur du récipient (440), d'une seconde différence de température.

4. Dispositif de stockage d'énergie thermique selon la revendication précédente, dans lequel
la seconde différence de température représente au moins 10 %, en particulier au moins 20 %, et en outre en particulier au moins 30 % de la différence de température totale entre la température la plus élevée et la température la plus basse à l'intérieur du récipient.

5. Dispositif de stockage d'énergie thermique selon l'une quelconque des revendications ci-dessus, dans lequel
le matériau de stockage d'énergie comprend au moins l'un du groupe constitué par les pierres, les briques et les céramiques.

6. Système de transport d'énergie thermique (500, 600, 700) comprenant
un dispositif de stockage d'énergie thermique (400) selon l'une quelconque des revendications ci-dessus,
un dispositif de stockage d'énergie thermique supplémentaire (550, 650), et
un élément de transfert d'énergie thermique (560) qui est raccordé entre le dispositif de stockage d'énergie thermique (400) et le dispositif de stockage d'énergie thermique supplémentaire (550, 650) et qui est adapté pour transférer de l'énergie thermique reçue à partir du premier fluide de transfert de chaleur qui est distribué à partir du second orifice de fluide (430) au dispositif de stockage d'énergie thermique supplémentaire (550, 650).

7. Système de transport d'énergie thermique selon la revendication 6 précédente, comprenant en outre
un générateur de vapeur à récupération de chaleur (570) qui est couplé de manière fluidique avec le dispositif de stockage d'énergie thermique supplémentaire (550, 650).

8. Système de transport d'énergie thermique selon la revendication 7 précédente, comprenant en outre
une turbine à vapeur (580) qui est entraînée de manière thermique par le générateur de vapeur à récupération de chaleur (570).

9. Système de transport d'énergie thermique selon l'une quelconque des revendications 6 à 8 précédentes, dans lequel
le dispositif de stockage d'énergie thermique supplémentaire (550) est une cuve qui peut être remplie avec un liquide, dans lequel le système de transport d'énergie thermique (500) comprend en outre un moyen de pressurisation qui est raccordé à la cuve et qui est configuré pour pressuriser un liquide au sein de la cuve.

10. Système de transport d'énergie thermique selon l'une quelconque des revendications 7 à 9 précédentes, comprenant en outre
un échangeur de chaleur (660) qui est raccordé entre le dispositif de stockage d'énergie thermique supplémentaire (650) et le générateur de vapeur à récupération de chaleur.

11. Système de transport d'énergie thermique selon l'une quelconque des revendications 7 à 10 précédentes, comprenant en outre
un dispositif de pompage (760) qui est raccordé entre le dispositif de stockage d'énergie thermique supplémentaire (650) et le générateur de vapeur à récupération de chaleur (570) .

12. Procédé destiné à stocker de l'énergie thermique au sein d'un dispositif de stockage d'énergie thermique, en particulier au sein du dispositif de stockage d'énergie thermique (400) selon l'une quelconque des revendications 1 à 5, dans lequel le procédé comprend
dans un premier mode de fonctionnement, dans lequel un matériau de stockage de chaleur est supposé recevoir de l'énergie thermique à partir d'un premier fluide de transfert de chaleur,
le guidage du premier fluide de transfert de chaleur le long du matériau de stockage de chaleur à partir d'un premier orifice de fluide (420) vers un second orifice de fluide (430) jusqu'à ce qu'une première température de sortie du premier fluide de transfert de chaleur qui est distribué à partir du second orifice de fluide (430) ait atteint une première température prédéterminée,
**caractérisé en ce que**
la première température prédéterminée est plus élevée qu'un premier niveau de température d'une première section au sein du récipient (440), qui est la section avec la température la plus basse à l'intérieur du récipient (440), d'une première différence de température,
dans lequel la première différence de température se situe entre 10 % et 30 % de la différence de température totale à l'intérieur du récipient (440).

13. Procédé destiné à libérer de l'énergie thermique à partir d'un dispositif de stockage d'énergie thermique, en particulier à partir du dispositif de stockage d'énergie thermique (400) selon l'une quelconque des revendications 1 à 5, dans lequel le procédé comprend
dans un second mode de fonctionnement, dans lequel un matériau de stockage de chaleur est supposé libérer de l'énergie thermique vers le premier fluide de transfert de chaleur ou vers un second fluide de transfert de chaleur, le guidage du premier fluide de transfert de chaleur ou du second fluide de transfert de chaleur à partir du second orifice de fluide (430) vers le premier orifice de fluide (420) jusqu'à ce qu'une seconde température de sortie du premier fluide de transfert de fluide ou du second fluide de transfert de chaleur qui est distribué à partir du premier orifice de fluide (420) ait atteint une seconde température prédéterminée,
**caractérisé en ce que**
la seconde température prédéterminée est plus basse qu'un second niveau de température d'une seconde section au sein du récipient (440), qui est la section avec la température la plus élevée à l'intérieur du récipient (440), d'une seconde différence de température,
dans lequel la seconde différence de température se situe entre 10 % et 30 % de la différence de température totale à l'intérieur du récipient (440).
